(19) Europäisches Patentamt
European Patent Office
Office européen des brevets

(11) EP 2 019 240 B1

(12) # EUROPÄISCHE PATENTSCHRIFT

(45) Veröffentlichungstag und Bekanntmachung des Hinweises auf die Patenterteilung:
**12.11.2014 Patentblatt 2014/46**

(51) Int Cl.:
***F16K 17/10*** *(2006.01)* ***F15B 11/042*** *(2006.01)*

(21) Anmeldenummer: **07014694.9**

(22) Anmeldetag: **26.07.2007**

(54) **Hydraulisches Lastschaltventil mit RC-Glied**

Hydraulic load shift valve with RC element

Soupape de commande de charge hydraulique à circuit RC

(84) Benannte Vertragsstaaten:
**CH FI FR GB IT LI**

(43) Veröffentlichungstag der Anmeldung:
**28.01.2009 Patentblatt 2009/05**

(73) Patentinhaber: **MOOG GmbH**
**D-71034 Böblingen (DE)**

(72) Erfinder:
- **Händle, Werner**
**71563 Siegelhausen (DE)**
- **Zervas, Bernhard**
**72119 Ammerbuch (DE)**

(74) Vertreter: **Jostarndt, Hans-Dieter**
**Jostarndt Patentanwalts-AG**
**Brüsseler Ring 51**
**52074 Aachen (DE)**

(56) Entgegenhaltungen:
**DE-A1- 3 808 962** **DE-A1- 10 023 583**
**FR-A- 2 158 975** **US-A- 3 180 355**
**US-A- 3 960 170** **US-A- 4 015 620**

EP 2 019 240 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft ein hydraulisches Lastschaltventil mit einem Gehäuse mit einem Steuerraum, einem Lastkanal, mindestens einem Entlastungskanal und einem im Gehäuse gegen eine Feder zumindest zwischen einer Normal- und einer Uberlaststellung verschiebbar geführten Ventilkolben, wobei der Ventilkolben in der Normalstellung den Lastkanal und den Steuerraum von dem mindestens einem Entlastungskanal trennt.

Ein solches schnell schaltendes hydraulisches Lastschaltventil ist z.B. aus der US 4015620 bekannt. Derartige Lastschaltventile weisen, nach Erreichen des eingestellten Druckes, eine Ansprechzeit von etwa 2 Millisekunden auf und werden z.B. bei Hochgeschwindigkeitspressen eingesetzt, um die Vorrichtung vollständig zu schützen. Weiter typische Anwendungen sind Teststände und Walzenanlagen in der Stahl-, Aluminium-, Papier- und Kunststoffverarbeitung. Solche hydraulischen Lastschaltventile sind wesentlich schneller als Druckbegrenzungsventile und schützen Maschinen und Anlagen im Störungsfall vor hohen Kräften, die zu erheblichen Schäden führen können. Eine möglichst frühzeitige und extrem schnelle Reaktion des Lastschaltventils auf einen Überlastfall verbessert die Schutzfunktion. Zwar weist das Lastschaltventil aus der US 4015620 bereits eine schnelle Reaktion auf. Für verschiedenste Anwendungszwecke ist es jedoch wünschenswert, ein noch schnelleres Ansprechen des Ventils bereitzustellen, wodurch ein noch größerer Schutz für teure Anlagen gewährleistet ist.

Aus der US-A-3180555 ist ein Druckbegrenzungsventil bekannt, bei dem im Normalbetrieb der Steuerraum immer mit Druck beaufschlagt ist. Der Druck im Steuerraum wird durch das Pilotventil vorgegeben. Durch diese Bauweise wird im Ansprechfall nur ein geringer Differenzdruck zwischen den beiden Steuerflächen des Hauptkolbens wirksam, was geringe Öffnungs- und Beschleunigungskräfte bedeutet. Die in dem Ventil integrierte Drossel hat zwei Funktionen. Zum Einen soll sie den Steuerraum mit dem Druckanschluss verbinden, wodurch ein Druckausgleich bewirkt wird, wenn das Pilotventil nicht angesprochen hat, und zum Anderen wird der Steuervolumenstrom für das Pilotventil eingestellt, sobald das Pilotventil abgesprochen hat.

Es ist daher die Aufgabe der vorliegenden Erfindung, ein hydraulisches Lastschaltventil der eingangs genannten Art bereitzustellen, das ein noch schnelleres Ansprechen des Ventils beim Überlastfall gewährleistet, um Druckspitzen in der Anlage auf ein Minimum zu beschränken.

Hierzu ist bei einem hydraulischen Lastschaltventil der eingangs genannten Art vorgesehen, dass der Ventilkolben einen Düsenkanal aufweist, der den Lastkanal mit dem Steuerraum zumindest in der Normalstellung verbindet und der Ventilkolben und der Steuerraum ein hydraulisches RC-Glied bilden, das derart dimensioniert ist, dass der Ventilkolben im wesentlichen unabhängig vom Lastdruck bei Überschreiten einer vorbestimmten Druckanstiegsgeschwindigkeit öffnet. Das Lastschaltventil ist somit in der Lage, bereits vor Erreichen eines bestimmten Druckniveaus allein aufgrund Überschreitens einer vorbestimmten Druckanstiegsgeschwindigkeit zu schalten. Die Dimensionierung des hydraulischen RC-Glieds (Die Düse bzw. Blende definiert den hydraulischen Widerstand R und das Steuervolumen im Steuerraum die hydraulische Kapazität $C_H$) definiert die Schaltcharakteristik. Der Düsenkanal im Ventilkolben ist möglichst kurz und/oder weist eine genau dimensionierte Blende bzw. Düse auf. Bei geschlossenem Ventil lässt sich das Ventil über folgendes Ersatzschaltbild beschreiben:

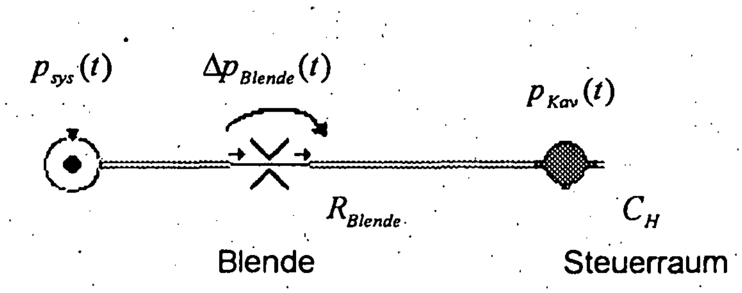


Daraus ergibt sich für den Fachmann folgender Zusammenhang für die Übertragungsfunktion des RC-Gliedes:

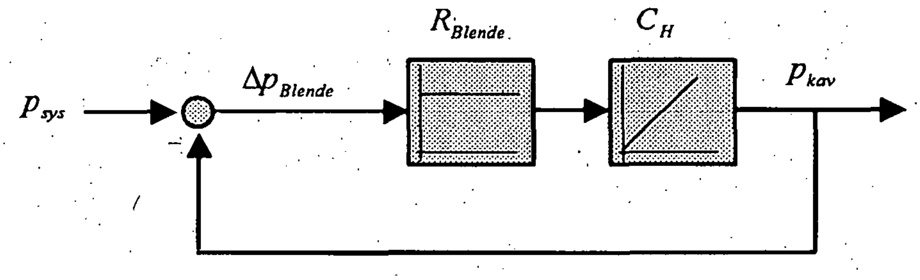


Das entspricht:

$$\frac{\Delta p_{Blende}}{p_{sys}} = \frac{1}{1 + \frac{R_{Blende}}{C_H s}}$$

mit

$s$ = Variable der Laplacetransformation
$\Delta p_{Blende}$ = Druckabfall an Blende
$\Delta p_{AP}$ = Arbeitspunkt der Blende
$C_H$ = Hydraulische Kapazität
$P_{sys}$= Druck im System
$P_{kav}$ = Druck im Steuerraum
$R_{Blende}$ = Blendenwiderstand

Die hydraulische Schaltung soll so eingestellt werden, dass bei einer bestimmten Druckanstiegsgeschwindigkeit im System ein definierter Druckabfall über einer Blende entsteht, der zum Schalten des Ventils (Überwinden der Federkraft) führt. Hierbei gilt:

$A$ = Blendenquerschnitt
$\rho$ = Dichte des Öls
$V_{Kav}$ = Volumen des Steuerraums
$\alpha_D$ = Durchflusskoeffizient
$E_{öl}$ = Kompressionsmodul des Öls
$\frac{\Delta p_{sys}}{\Delta t}$ = Druckanstiegsgeschwindigkeit im System, die zum Auslösen des Ventils führt.

Daraus berechnen sich der Blendenwiderstand und die hydraulische Kapazität.
Für den Widerstand in der Blende gilt linearisiert im Arbeitspunkt $\Delta p_{AP}$ :

$$R_{Blende} = A\alpha_D \sqrt{\frac{1}{2\rho\Delta p_{AP}}}$$

Für die hydraulische Kapazität gilt:

$$C_H = \frac{V_{Kav}}{E_{Öl}}$$

Bei einer konstanten Druckanstiegsgeschwindigkeit im System

$$p_{sys} = \frac{\Delta p_{sys}}{\Delta t} t$$

Und der oben beschriebenen Übertragungsfunktion ergibt sich für den Blendenwiderstand über der Blende:

$$R_{Blende} = \frac{C_H}{\Delta p_{Blende}} \frac{\Delta p_{sys}}{\Delta t}$$

Aus diesen Parametern lässt sich nun für den Fachmann das Volumen des Steuerraums $V_{Kav}$ als auch der Blenden- bzw. Düsenquerschnitt A hinsichtlich einer gewählten Druckanstiegsgeschwindigkeit aufeinander abstimmen sowie die geeignete Druckfeder (Schließkraft) wählen.

Wird das Ventil nur minimal geöffnet, fällt der Druck im Steuerraum schlagartig ab und der gesamte Systemdruck beschleunigt das weitere Öffnen des Ventils. Dieser Mitkoppeleffekt ist verantwortlich für das extrem schnelle Öffnen des Ventils.

Charakteristisch für Überlastfälle sind extrem hohe Druckanstiegsgeschwindigkeiten bis zu einigen 1000 bar pro Sekunde.

Das extrem schnelle Ansprechen des Lastschaltventils bereits auf die Druckanstiegsgeschwindigkeit und das schnelle Öffnen erhöht die Schutzfunktion für Anlagen, da Druckspitzen weitgehend vermieden werden.

Rechnerischer Vergleich von bekannter Technik mit vorliegender Erfindung:

**Beispiel entspricht realen Bedingungen:**

| | Bekannte Technik | Vorliegende Erfindung |
|---|---|---|
| Lastdruck vor Überlast | 100 bar | 100 bar |
| Eingestellter Auslösedruck an Ventil | 350 bar | 350 bar |
| Auslösewert bei Druckanstiegsgeschwindigkeit | Nicht möglich | 9.000 bar/s |
| Druckanstiegsgeschwindigkeit durch Überlast | 10.000 bar/s | 10.000 bar/s |
| Totzeit bis Ventil reagiert | 25 ms | 0 ms |
| Öffnungszeit des Ventils | 2 ms | 2 ms |
| Gesamtzeit bis Antrieb entlastet ist | 27 ms | 2 ms |

Bevorzugt ist der Steuerraum zumindest in der Normalstellung bis auf den Düsenkanal im Ventilkolben geschlossen. Das bedeutet, dass keine weitere Zulaufleitung für Hydraulikflüssigkeit in den Steuerraum mündet und der Ventilkolben gegen das im Steuerraum eingeschlossene Steuervolumen arbeitet. Das Zuströmen erfolgt einzig und allein über den Düsenkanal. Hierdurch lässt sich eine sehr genaue Schaltcharakteristik erzielen.

Von weiterem Vorteil ist es, wenn gemäß einer Variante an dem Steuerraum ein Druckbegrenzungsventil oder Proportional-Druckbegrenzungsventil angeschlossen ist. Bei langsamen Druckanstiegen löst das Lastschaltventil auch dann aus, sobald im Steuerraum der am Druckbegrenzungsventil oder Proportional-Druckbegrenzungsventil eingestellte Schaltdruck erreicht ist. Hierdurch werden Überlastfälle abgedeckt, bei denen die Druckanstiegsgeschwindigkeit unterhalb des Schwellwert liegt. Prinzipiell ist es auch möglich, ein solches Auslösen des Ventils bei langsamen Druckanstiegen über einen extern einstellbaren Druck im Steuerraum erfolgen zu lassen.

Eine sehr kompakte Bauweise lässt sich bei einer Ausführungsform dadurch erzielen, dass das Druckbegrenzungsventil oder Proportional-Druckbegrenzungsventil im Gehäuse integriert ist. Aufgrund der kurzen Wege lässt sich auch das Ansprechverhalten des Druckbegrenzungsventils oder Proportional-Druckbegrenzungsventils verbessern.

Darüber hinaus kann der Ventilkolben eine Pilotstufe zum Trennen und Öffnen des Steuerraums vom und zum mindestens einen Entlastungskanal und einer Laststufe zum Trennen und Öffnen des Steuerraums vom und zum mindestens einen Entlastungskanal aufweisen. Am Ventilkolben sind somit beide Stufen integriert, wodurch wiederum kurze Hydraulikwege innerhalb des Lastschaltwegs realisierbar sind.

Von besonderem Vorteil ist es gemäß einer Ausführungsform, wenn die Pilotstufe des Ventilkolbens mit einem ersten Entlastungskanal und die Laststufe mit einem zweiten Entlastungskanal verbindbar ist. Hierdurch werden Rückwirkungen beim Öffnen der Laststufe auf das Öffnen der Pilotstufe für die Entlastung des Steuerraums verhindert. Diese Rückwirkungen treten aufgrund von Druckspitzen im zweiten Entlastungskanal auf, die durch Induktivität und Kapazität des zweiten Entlastungskanals verursacht werden.

Günstigerweise sind der erste Entlastungskanal und der zweite Entlastungskanal jeweils als getrennte, mit einem Tank verbundene Kanäle ausgestaltet. Durch unabhängige Entlastungskanäle lässt sich auch die Öffnungsgeschwindigkeit erhöhen. Bei dem zweiten Entlastungskanal handelt es sich in aller Regel um die Haupttankleitung, die aufgrund der räumlichen Trennung nunmehr keinen negativen Einfluss auf die Entlastung des Steuerraums durch die Pilotstufe hat, wodurch das Ventilverhalten nicht negativ beeinflusst wird.

Zwar besteht prinzipiell auch die Möglichkeit, den Abflusskanal des Druckbegrenzungsventils oder Proportional-Druckbegrenzungsventils in den ersten Entlastungskanal münden zu lassen; es können jedoch Einflüsse weiter vermieden werden, wenn das Druckbegrenzungsventil oder Proportional- Druckbegrenzungsventils eigenständig am Tank angeschlossen ist. Die Anordnung der Last- und Pilotstufe an ein und demselben Ventilkolben eröffnet die Möglichkeit, auch die Steuerquerschnitte im Vergleich zum Stand der Technik erheblich zu vergrößern, wodurch sich die Öffnungsgeschwindigkeit nochmals erhöhen lässt.

Gemäß einer Ausführungsform kann die Pilotstufe des Ventilkolbens derart ausgestaltet sein, dass diese im Öffnungsvorgang erst den Steuerraum zum mindest einen Entlastungskanal öffnet und nach einer vorbestimmten Wegstecke und vor einem mechanischen Anschlag den Steuerraum wieder von dem mindesten einen Entlastungskanal trennt. Diese Ausgestaltung bewirkt ein frühzeitiges automatisches Abbremsen des Ventilkolbens, so dass dieser noch vor einem mechanischen Anschlag zum Stehen kommt. Der Arbeitshub, Bremsweg und die Bremscharakteristik des Kolbens werden mit der Steuergeometrie bestimmt. Hierzu kann jede Steuerkante mit beliebigen Steuergeometrien gestaltet werden, z.B. gerade Steuerkante, (Halb-)kreise, Rechtecke, Quadrate, Dreiecke etc.

Von Vorteil ist es in diesem Zusammenhang, wenn der Ventilkolben besonders massearm ausgestaltet ist, um die Öffnungsdynamik zu verbessern und die Bremskräfte zu reduzieren.

Günstigerweise kann als Feder eine Druckfeder eingesetzt werden, die sich einerseits im Steuerraum am Gehäuse und andererseits am Ventilkolben abstützt und in der Normalstellung den Ventilkolben gegen einen Ventilsitz der Pilot- und/oder Laststufe drückt. Durch die Integration der Druckfeder im Steuerraum wird wiederum eine kompakte Bauweise erzeugt.

Gemäß einer weiteren Ausgestaltung kann bevorzugt das RC-Glied derart dimensioniert sein, dass die vorbestimmte Druckanstiegsgeschwindigkeit 1000 bis 100000 bar/s beträgt. Hierbei handelt es sich um einen durch Simulation ermittelten Wert, der für viele Fälle zum verbesserten Schutz einer Anlage führt.

Des Weiteren kann das Lastschaltventil wahlweise in Kolben-Hülsen-Bauart oder als Kolben in Gehäusekonstruktionen ausgeführt werden. Es besteht auch die Möglichkeit, einen gehärteten Kolben zu verwenden, der in einer gehärteten Hülse verschiebbar angeordnet ist. Selbstverständlich kann das hydraulische Lastschaltventil in verschiedenen Baugrößen hergestellt werden, um insbesondere auf die unterschiedlichen Lastanwendungsfälle abgestimmt zu sein. Eine weitere Möglichkeit besteht darin, den Kolben mit Strömungskraftkompensation auszustatten.

Im Folgenden werden Ausführungsbeispiele der vorliegenden Erfindung anhand einer Zeichnung näher erläutert. Es zeigen:

Fig. 1 eine schematische Darstellung einer Presszylinderanordnung mit hydraulischem Lastschaltventil,

Fig. 2 das Lastschaltventil aus Fig. 1 in einer schematischen vergrößerten Darstellung und

Fig. 3 eine schematische Darstellung eines zweiten Ausführungsbeispiels eines hydraulischen Lastschaltventils.

Die in Fig. 1 wiedergegebene Prinzipdarstellung zeigt eine Überlastsicherung eines Presszylinders 1, der mittels einer hydraulischen Schaltung 2 zur Kraft- und Bewegungssteuerung verbunden ist. Auf den Presszylinder 1 wirkt eine mechanische Kraft M und bei Überlast sind bei der hier beschriebenen Vorrichtung hohe Druckanstiegsgeschwindigkeiten typisch. Neben Pressen können derartige hohe Druckanstiegsgeschwindigkeiten auch bei Testständen und Walzenanlagen in der Stahl-, Aluminium-, Papier- und Kunststoffverarbeitung auftreten. Jedoch sind auch weitere Anwendungen möglich. Der Presszylinder steht mittels einer Ventilleitung 3 mit einem schnell schaltenden Lastschaltventil 4 in Verbindung. Das Lastschaltventil 4 umfasst ein Gehäuse 5 mit einem Steuerraum 7 und einem im Gehäuse 5 verschiebbar geführten Ventilkolben 6. Des Weiteren ist das Gehäuse 5 mit einem Lastkanal 8 versehen, mit dem die Ventilleitung 3 verbunden ist. Der Lastkanal 8 geht im Gehäuse 5 in die Ventilbohrung 9 über, die einen durchgängig gleichen Durchmesser bis hin zum Steuerraum 7 aufweist, um möglichst große Strömungsquerschnitte bereitzustellen.

Der Ventilkolben 6 und die zugehörige Ventilbohrung 9 sind unterteilt in eine Laststufe 10 und eine Pilotstufe 11. Für die Laststufe 10 befindet sich im Gehäuse ein Ringkanal 12, der in einen Tankkanal 12.1 mündet, der mittels einer Tankleitung 13 zu einem Hydrauliktank 14 führt.

Die Pilotstufe 11 weist im Gehäuse 5 einen Ringkanal 15 auf, der in einen Tankkanal 15.1 mündet und mittels einer Tankleitung 16 mit dem Hydrauliktank 14 in Verbindung steht.

Der Steuerraum 7 steht mittels einer Tankleitung 17 und einem darin angeordneten Druckbegrenzungsventil 18 ebenfalls mit dem Hydrauliktank 14 in Fluidverbindung.

Der Ventilkolben 6 wird mittels einer im Steuerraum 7 angeordneten Druckfeder 19 in die in Fig. 1 dargestellte Normalstellung gedrückt. In dieser Normalstellung ist sowohl der Lastkanal 8 vom Ringkanal 12 und Tankkanal 12.1 getrennt als auch der Steuerraum 7 vom Ringkanal 15 und Tankkanal 15.1 getrennt. Hierzu weist der Ventilkolben 6 einen zylindrischen an den Querschnitt der Ventilbohrung 9 angepassten Ventilbereich 20 auf. Dieser Ventilbereich 20 geht in der Normalstellung im Bereich des Ringkanals 15 in einen im Durchmesser verringerten Ventilmittelbereich 21 über, an den sich der kegelstumpfförmige Ventilkopf 22 zum Verschließen des Steuerraums 7 anschließt. An der Stirnseite des Ventilbereichs 20 befindet sich eine schematisch angedeutete Steuergeometrie (Steuerkontur) 23. Ähnliches ist im Übergangsbereich von dem Ventilbereich 20 zum Ventilmittelbereich 21 vorgesehen (siehe Bezugsziffer 24). Von der Stirnfläche 20.1 des Ventilbereichs 20 bis zur Stirnfläche 22.1 am gegenüberliegenden Ende des Ventilkolbens 6 erstreckt sich ein Düsenkanal 25 (strichlierte Linie), der zumindest an einer Stelle eine genau definierte Düse 26 (bzw. Blende) aufweist. Bei dem gezeigten Ausführungsbeispiel befindet sich die Düse 26 in etwa der Mitte des Ventilkolbens 6 auf der Höhe des Ventilmittelbereichs 21.

Das Zusammenspiel von dem Düsenkanal 25 mit der Düse 26 und dem Volumen $V_{Kav}$ des Steuerraums 7 erzeugt ein hydraulisches RC-Glied. Sobald die Druckanstiegsgeschwindigkeit $\frac{\Delta p_{sys}}{\Delta t}$ (im Presszylinder 1 oder in der Ventilleitung 3) größer oder gleich des mit dem RC-Glied eingestellten Wertes ist, ist die auf den Ventilkolben 6 einwirkende Kraft so hoch, dass sich der Ventilkolben 6 gegen die Kraft der Druckfeder 19 in den Steuerraum 7 hineinbewegt.

Dieser zu wählende Grenzwert für die Druckanstiegsgeschwindigkeit hängt vom jeweiligen zu schützenden System ab.

Im Folgenden wird die Wirkungs- und Funktionsweise des ersten Ausführungsbeispiels näher erläutert.

Im Normalbetrieb nimmt das Lastschaltventil 4 die in Fig. 1 und 2 dargestellte Normalstellung ein. Der Presszylinder 1 wird mittels der hydraulischen Schaltung 2 in der vorgegebenen Weise angesteuert und verfahren. Stellt sich aber aufgrund einer Störung eine Druckerhöhung im Presszylinder 1 und somit der Ventilleitung 3 ein, so liegt am Lastkanal 8 dieser Druckanstieg ebenfalls vor. Aufgrund der Tatsache, dass der Steuerraum 7 in der Normalstellung vollständig verschlossen ist, lässt sich auch das Ölvolumen im Steuerraum 7 nicht verdrängen. Um auch bei langsamen Druckanstiegen einen Überlastschutz bereitzustellen, ist an dem Steuerraum 7 ein Druckbegrenzungsventil 18 angeschlossen, das bei Erreichen eines bestimmten Überdrucks die Tankleitung 17 durchschaltet, so dass sich der Ventilkolben 6 nach rechts bewegt. Bei langsamen Druckanstiegen erreicht der Überdruck auch den Steuerraum 7 über den Düsenkanal 25. Die Hydraulikflüssigkeit kann dann bei geöffnetem Lastventil 4 über den Ringkanal 12, den Tankkanal 12.1 und die Tankleitung 13 in den Hyd-Das Lastschaltventil 4 ist aber auch in der Lage, bereits bei Überschreiten einer vorgegebenen Druckanstiegsgeschwindigkeit zu öffnen. Aufgrund der Übertragungsfunktion des RC-Gliedes einschl. des Düsenkanals 25 und der Düse 26 wird ab einer bestimmten Druckanstiegsgeschwindigkeit die Schließkraft der Druckfeder 19 überwunden und der Ventilkolben 6 in die geöffnete Laststellung überführt. Dieses Öffnen erfolgt weitaus schneller, als bei druckgesteuerten Überlastventilen, die erst ab einem bestimmten eingestellten Überdruck öffnen. Aufgrund des relativ großen Öffnungsquerschnitts sowohl in der Laststufe 10 als auch in der Pilotstufe 11 werden sehr schnell große Strömungsquerschnitte zur Verfügung gestellt, die auch einen schnellen Öffnungsvorgang des Ventils 4 herbeiführen. In der Laststufe 10 steht bereits nach einer geringfügigen Bewegung des Ventilkolbens 6 der gesamte Strömungsquerschnitt der Ventilbohrung 9 zur Verfügung. In der Pilotstufe 11 steht ebenfalls nach einer geringen Öffnungsbewegung des Ventilkolbens 6 der gesamte Ringkanal zwischen der Ventilbohrung 9 und dem Außenumfang des Ventilmittelbereichs 21 zur Verfügung, was zu einem schnellen Ausströmen der Hydraulikflüssigkeit aus dem Steuerraum 7 führt. Die Tankkanäle 12.1, 15.1 und die Tankleitung 17 sind unabhängig voneinander, so dass insbesondere für die Entlastung des Steuerraums 7 keine Rückwirkung durch Druckspitzen vorhanden sind, die durch Induktivität und Kapazität in der Tankleitung 13 verursacht werden.

Des Weiteren sind die Länge des Ventilbereichs 20, des Ventilmittelbereichs 21 und des Ventilkopfs 22 so aufeinander abgestimmt, dass nach einer bestimmten Verschiebestrecke des Ventilkolbens 6 nach rechts (Fig. 1 und 2) die Steuergeometrie 24 den Ringkanal 15 und Tankkanal 15.1 überdeckt und anschließend in den letzten Abschnitt der Ventilbohrung 9 kurz vor dem Steuerraum 7 eintaucht. Hierdurch wird die Bewegung des Ventilkolbens 6 abgedämpft, der Steuerraum 7 wieder verschlossen und das noch vorhandene Hydraulikflüssigkeitsvolumen dient zum Stoppen der Ventilkolbenbewegung. Die hierfür notwendige Strecke ist geringer als der Abstand der Stirnfläche 22.1 des Ventilkopfs 22 zur gegenüberliegenden Wandung des Steuerraums 7, so dass es nicht zu einem mechanischen Anschlagen des Ventilkolbens 6 am Gehäuse 5 kommt. Bei diesem Vorgang dient also der Ventilbereich 20 auch zum Verschließen der Pilotstufe 11.

Sollten längere Tankleitungen (> 1 m) erforderlich sein, kann zur Entkopplung der hydraulischen Induktivität der Leitung ein Zwischentank oder Speicher vorgesehen werden.

Im Folgenden wird anhand der Fig. 3 ein weiteres Ausführungsbeispiel der vorliegenden Erfindung näher erläutert. Es soll nur auf die wesentlichen Unterschiede zum vorangegangenen Ausführungsbeispiel eingegangen werden, weshalb unter Zuhilfenahme derselben Bezugsziffern auf gleiche und wirkungsgleiche Bauteile Bezug genommen und auf die obige Beschreibung verwiesen werden. Das in Fig. 3 dargestellte Lastschaltventil 4 kann ohne weiteres anstelle des in Fig. 2 gezeigten Lastschaltventils in der Konstruktion gemäß Fig. 1 eingesetzt und demnach an die Ventilleitung 3 angeschlossen werden. Ein wesentlicher Unterschied besteht in der Form des Ventilkolbens 6. Dieser ist als Hohlzylinder mit dem der Laststufe 10 zugeordneten Ventilkopf 27 ausgestaltet. Der Ventilkopf 27 ist im vorderen Abschnitt kegelstumpfförmig ausgebildet und verschließt in der in Fig. 3 dargestellten Stellung die Laststufe 10. Der Düsenkanal 25 mit der Düse 26 befindet sich im Bereich des Ventilkopfs 27. Durch seine hohlzylindrische Form stellt das Innere des Ventilkolbens 6 quasi eine Vergrößerung des Steuerraums 7 dar. Das hat den Vorteil, dass der Steuerraum 7 eine Verlängerung der Ventilbohrung 9 ist. Die Druckfeder 19 stützt sich am rückwärtigen Ende des Steuerraums 7 und an der Innenseite des Ventilskopfs 27 ab. Die Wandung des Ventilkolbens 6 weist mindestens eine seitliche Öffnung 24.1 auf, die als Steuergeometrie die Pilotstufe 11 öffnet oder verschließt. In der in Fig. 3 dargestellten Stellung befindet sich die Öffnung 24.1 seitlich versetzt zum Ringkanal 15, so dass der Steuerraum 7 von diesem und dem Tankkanal 15.1 getrennt ist.

Als weitere Besonderheit weist dieses Lastschaltventil 4 ein im Gehäuse 5 integriertes Druckbegrenzungsventil 18 auf. Die Tankleitung 17 des Druckbegrenzungsventils 18 mündet in den Tankkanal 15.1, so dass eine Ableitung der Hydraulikflüssigkeit über die Tankleitung 16 (nicht dargestellt in Fig. 3) erfolgt.

Auch hier müssen wieder der Düsenkanal 25 mit der Düse 26 und das Volumen $V_{Kav}$ des Steuerraums 7 sowie die Schließkraft der Druckfeder 19 aufeinander abgestimmt werden. Nach der oben angegebenen Formel ergibt sich dann eine Druckanstiegsgeschwindigkeit als Grenzwert, bei der der Ventilkolben 6 öffnet und sich die Federkraft der Druckfeder 19 nach rechts verschiebt. Sowohl die Laststufe 10 als auch die Pilotstufe 11 werden sehr schnell geöffnet. Je nach Anzahl der Öffnungen 24.1 ergibt sich auch für die Pilotstufe 11 ein großer Öffnungsquerschnitt. Der Durchmesser der Öffnung 24.1 ist nur geringfügig größer als die Breite des Ringkanals 15. Bewegt sich der Ventilkolben 6 weiter nach rechts, so verkleinert sich der Öffnungsquerschnitt wieder und der Ventilkolben 6 wird abgebremst. Sofern der Abstand zwischen dem Ventilkolben 6 und der Grundfläche des Steuerraums 7 ausreichend gewählt ist, kann es wieder zu einem vollständigen Abbremsen des Ventilkolbens 6 vor einem mechanischen Anschlagen kommen.

Kombinationen der beiden oben beschriebenen Ausführungsformen (z.B. Integration eines Druckbegrenzungsventils 18 im Gehäuse 5 der ersten Ausführungsform etc.) können soweit sinnvoll durchgeführt werden. Die Ventilkolben 6 werden bei beiden Ausführungsformen möglichst massearm ausgeführt, so dass es zu schnellen Öffnungsbewegungen kommt.

## Patentansprüche

1. Hydraulisches Lastschaltventil (4) mit einem Gehäuse (5) mit einem Steuerraum (7), einem Lastkanal (8), mindestens einem Entlastungskanal (12,12.1;15,15.1) und einem im Gehäuse (5) gegen eine Feder (19) zumindest zwischen einer Normal- und einer Überlaststellung verschiebbar geführten Ventilkolben (6), wobei der Ventilkolben (6) in der Normalstellung den Lastkanal (8) und den Steuerraum (7) von dem mindestens einen Entlastungskanal (12,12.1;15,15.1) trennt, **dadurch gekennzeichnet, dass** der Ventilkolben (6) einen Düsenkanal (25) aufweist, der den Lastkanal (8) mit dem Steuerraum (7) zumindest in der Normalstellung verbindet und der Ventilkolben (6) und der Steuerraum (7) somit ein hydraulisches RC-Glied bilden, das derart dimensioniert ist, dass der Ventilkolben (6) im wesentlichen unabhängig vom Lastdruck bei Überschreiten einer vorbestimmten Druckanstiegsgeschwindigkeit öffnet.

2. Hydraulisches Lastschaltventil (4) nach Anspruch 1, **dadurch gekennzeichnet, dass** der Steuerraum (7) zumindest

in der Normalstellung bis auf den Düsenkanal (25) im Ventilkolben (6) geschlossen ist.

3. Hydraulisches Lastschaltventil (4) nach Anspruch 1 oder 2, **dadurch gekennzeichnet, dass** an dem Steuerraum (7) ein Druckbegrenzungsventil (18) oder Proportional-Druckbegrenzungsventil angeschlossen ist.

4. Hydraulisches Lastschaltventil (4) nach Anspruch 3, **dadurch gekennzeichnet, dass** das Druckbegrenzungsventil (18) oder Proportional-Druckbegrenzungsventil im Gehäuse (5) integriert ist.

5. Hydraulisches Lastschaltventil (4) nach einem der vorangegangenen Ansprüche, **dadurch gekennzeichnet, dass** der Ventilkolben (6) eine Pilotstufe (11) zum Trennen und Öffnen des Steuerraums (7) vom und zum mindestens einen Entlastungskanal (15,15.1) und eine Laststufe (10) zum Trennen und Öffnen des Lastkanals (8) vom und zum mindestens einen Entlastungskanal (12,12.1) aufweiset.

6. Hydraulisches Lastschaltventil (4) nach Anspruch 5, **dadurch gekennzeichnet, dass** die Pilotstufe (11) des Ventilkolbens (6) mit einem ersten Entlastungskanal (15,15.1) und die Laststufe (10) mit einem zweiten Entlastungskanal (12,12.1) verbindbar ist.

7. Hydraulisches Lastschaltventil (4) nach Anspruch 6, **dadurch gekennzeichnet, dass** der erste Entlastungskanal (15,15,1) und der zweite Entlastungskanal (12,12,1) jeweils als getrennte, mit einem Tank verbundene Kanäle ausgestaltet sind.

8. Hydraulisches Lastschaltventil (4) nach einem der Ansprüche 3 bis 7, **dadurch gekennzeichnet, dass** das Druckbegrenzungsventil (18) oder Proportional-Druckbegrenzungsventil an einen Tank (14) angeschlossen ist.

9. Hydraulisches Lastschaltventil (4) nach Anspruch 7 oder 8, **dadurch gekennzeichnet, dass** das Druckbegrenzungsventil (18) oder Proportional-Druckbegrenzungsventil mittels eines eigenen unabhängigen Tankkanals (17) an einen Tank (14) angeschlossen ist.

10. Hydraulisches Lastschaltventil (4) nach einem der vorangegangenen Ansprüche, **dadurch gekennzeichnet, dass** die Pilotstufe (11) des Ventilkolbens (6) derart ausgestaltet ist, dass diese beim Öffnungsvorgang erst den Steuerraum (7) zum mindestens einen Entlastungskanal (15,15.1) öffnet und nach einer vorbestimmten Wegstrecke und vor einem mechanischen Anschlagen den Steuerraum (7) wieder von dem mindestens einem Entlasturigskanal (15,15.1) trennt.

11. Hydraulisches Lastschaltventil (4) nach einem der vorangegangenen Ansprüche, **dadurch gekennzeichnet, dass** die Feder eine Druckfeder (19) ist, die sich einerseits im Steuerraum (7) am Gehäuse (5) und andererseits am Ventilkolben (6) abstützt und in der Normalstellung den Ventilkolben (6) gegen einen Ventilsitz der Pilot- und/oder Laststufe (10,11) drückt.

12. Hydraulisches Lastschaltventil (4) nach einem der vorangegangenen Ansprüche, **dadurch gekennzeichnet, dass** das RC-Glied derart dimensioniert ist, dass die vorbestimmte Druckanstiegsgeschwindigkeit 1000 bis 100000 bar/s beträgt.

## Claims

1. A hydraulic load-shift valve (4), comprising a housing (5) with a control chamber (7), a load channel (8), at least one relief channel (12, 12.1; 15, 15.1) and a valve piston (6) that is mounted against a spring (19) in the housing (5) so as to move at least between a normal position and an overload position, whereby, in the normal position, the valve piston (6) separates the load channel (8) and the control chamber (7) from the at least one relief channel (12, 12.1; 15, 15.1), **characterized in that** the valve piston (6) has a nozzle channel (25) that connects the load channel (8) to the control chamber (7) at least in the normal position, as a result of which the valve piston (6) and the control chamber (7) form a hydraulic RC element which is dimensioned in such a way that the valve piston (6) opens essentially irrespective of the load pressure when a certain pressure-rise rate is exceeded.

2. The hydraulic load-shift valve (4) according to claim 1, **characterized in that**, at least in the normal position, the control chamber (7) is closed except for the nozzle channel (25) in the valve piston (6).

**3.** The hydraulic load-shift valve (4) according to claim 1 or 2, **characterized in that** a pressure-limiting valve (18) or a proportional pressure-limiting valve is connected to the control chamber (7).

**4.** The hydraulic load-shift valve (4) according to claim 3, **characterized in that** the pressure-limiting valve (18) or the proportional pressure-limiting valve is integrated into the housing (5).

**5.** The hydraulic load-shift valve (4) according to one of the preceding claims, **characterized in that** the valve piston (6) has a pilot stage (11) to separate and open the control chamber (7) from and to at least one relief channel (15, 15.1), and a load stage (10) to separate and open the load channel (8) from and to at least one relief channel (12, 12.1).

**6.** The hydraulic load-shift valve (4) according to claim 5, **characterized in that** the pilot stage (11) of the valve piston (6) can be connected to a first relief channel (15, 15.1), and the load stage (10) can be connected to a second relief channel (12, 12.1).

**7.** The hydraulic load-shift valve (4) according to claim 6, **characterized in that** the first relief channel (15, 15.1) and the second relief channel (12, 12.1) are each configured as separate channels that are connected to a tank.

**8.** The hydraulic load-shift valve (4) according to one of claims 3 to 7, **characterized in that** the pressure-limiting valve (18) or the proportional pressure-limiting valve is connected to a tank (14).

**9.** The hydraulic load-shift valve (4) according to claim 7 or 8, **characterized in that** the pressure-limiting valve (18) or the proportional pressure-limiting valve is connected to a tank (14) by means of a dedicated, independent tank channel (17).

**10.** The hydraulic load-shift valve (4) according to one of the preceding claims, **characterized in that** the pilot stage (11) of the valve piston (6) is configured in such a way that, during the opening procedure, it first opens the control chamber (7) to at least one relief channel (15, 15.1) and, after a prescribed travel distance and before a mechanical stop, it once again separates the control chamber (7) from the at least one relief channel (15, 15.1).

**11.** The hydraulic load-shift valve (4) according to one of the preceding claims, **characterized in that** the spring is a compression spring (19) which, on the one hand, is supported in the control chamber (7) on the housing (5) and, on the other hand, on the valve piston (6), and in the normal position, it presses the valve piston (6) against a valve seat of the pilot stage (10) and/or load stage (11).

**12.** The hydraulic load-shift valve (4) according to one of the preceding claims, **characterized in that** the RC element is dimensioned in such a way that the prescribed pressure-rise rate is 1000 bar/s to 100,000 bar/s.

**Revendications**

**1.** Soupape hydraulique anti-surcharge (4) avec un boîtier (5) comportant un espace de commande (7), un conduit de charge (8), au moins un conduit de décharge (12, 12.1, 15, 15.1) et un piston de soupape (6) coulissant dans le boîtier (5) à l'encontre d'un ressort (19) au moins entre une position normale et une position de surcharge, le piston de soupape (6) séparant, dans la position normale, le conduit de charge (8) et l'espace de commande (7) de l'au moins un conduit de décharge (12, 12.1 ; 15, 15.1), **caractérisée en ce que** le piston de soupape (6) comporte un conduit à buses (25) qui relie le conduit de charge (8) à l'espace de commande (7) au moins dans la position normale, et **en ce que** le piston de soupape (6) et l'espace de commande (7) forment ainsi un circuit RC hydraulique qui est dimensionné de telle sorte que le piston de soupape (6) s'ouvre sensiblement indépendamment de la pression de charge en cas de dépassement d'une vitesse de montée en pression prédéfinie.

**2.** Soupape hydraulique anti-surcharge (4) selon la revendication 1, **caractérisée en ce que** l'espace de commande (7) est, au moins dans la position normale, fermé à l'exception du conduit à buses (25) dans le piston de soupape (6).

**3.** Soupape hydraulique anti-surcharge (4) selon la revendication 1 ou 2, **caractérisée en ce qu'**une soupape de limitation de pression (18) ou une soupape de limitation de pression proportionnelle est raccordée à l'espace de commande (7).

**4.** Soupape hydraulique anti-surcharge (4) selon la revendication 3, **caractérisée en ce que** la soupape de limitation

de pression (18) ou la soupape de limitation de pression proportionnelle est intégrée dans le boîtier (5).

5. Soupape hydraulique anti-surcharge (4) selon l'une des revendications précédentes, **caractérisée en ce que** le piston de soupape (6) présente un niveau pilote (11) pour séparer l'espace de commande (7) de et l'ouvrir sur au moins un conduit de décharge (15, 15.1) et un niveau de charge (10) pour séparer le conduit de charge (8) de et l'ouvrir sur l'au moins un conduit de décharge (12, 12.1).

6. Soupape hydraulique anti-surcharge (4) selon la revendication 5, **caractérisée en ce que** le niveau pilote (11) du piston de soupape (6) peut être relié à un premier conduit de décharge (15, 15.1) et le niveau de charge (10), à un deuxième conduit de décharge (12, 12.1).

7. Soupape hydraulique anti-surcharge (4) selon la revendication 6, **caractérisée en ce que** le premier conduit de décharge (15, 15.1) et le deuxième conduit de décharge (12, 12.1) sont respectivement réalisés sous la forme de conduits séparés reliés à un réservoir.

8. Soupape hydraulique anti-surcharge (4) selon l'une des revendications 3 à 7, **caractérisée en ce que** la soupape de limitation de pression (18) ou la soupape de limitation de pression proportionnelle est raccordée à un réservoir (14).

9. Soupape hydraulique anti-surcharge (4) selon la revendication 7 ou 8, **caractérisée en ce que** la soupape de limitation de pression (18) ou la soupape de limitation de pression proportionnelle est raccordée à un réservoir (14) au moyen d'un propre conduit de réservoir (17) indépendant.

10. Soupape hydraulique anti-surcharge (4) selon l'une des revendications précédentes, **caractérisée en ce que** le niveau pilote (11) du piston de soupape (6) est conçu pour ouvrir tout d'abord, lors de l'opération d'ouverture, l'espace de commande (7) sur l'au moins un conduit de décharge (15, 15.1) et pour séparer à nouveau, après une course prédéfinie et avant de buter mécaniquement, l'espace de commande (7) de l'au moins un conduit de décharge (15, 15.1).

11. Soupape hydraulique anti-surcharge (4) selon l'une des revendications précédentes, **caractérisée en ce que** le ressort est un ressort de compression (19) qui prend appui, d'une part dans l'espace de commande (7) sur le boîtier (5) et, d'autre part, sur le piston de soupape (6), et qui, dans la position normale, pousse le piston de soupape (6) contre un siège de soupape du niveau pilote et/ou de charge (10, 11).

12. Soupape hydraulique anti-surcharge (4) selon l'une des revendications précédentes, **caractérisée en ce que** le circuit RC est dimensionné de manière telle que la vitesse de montée en pression prédéfinie est de 1 000 à 100 000 bars/s.

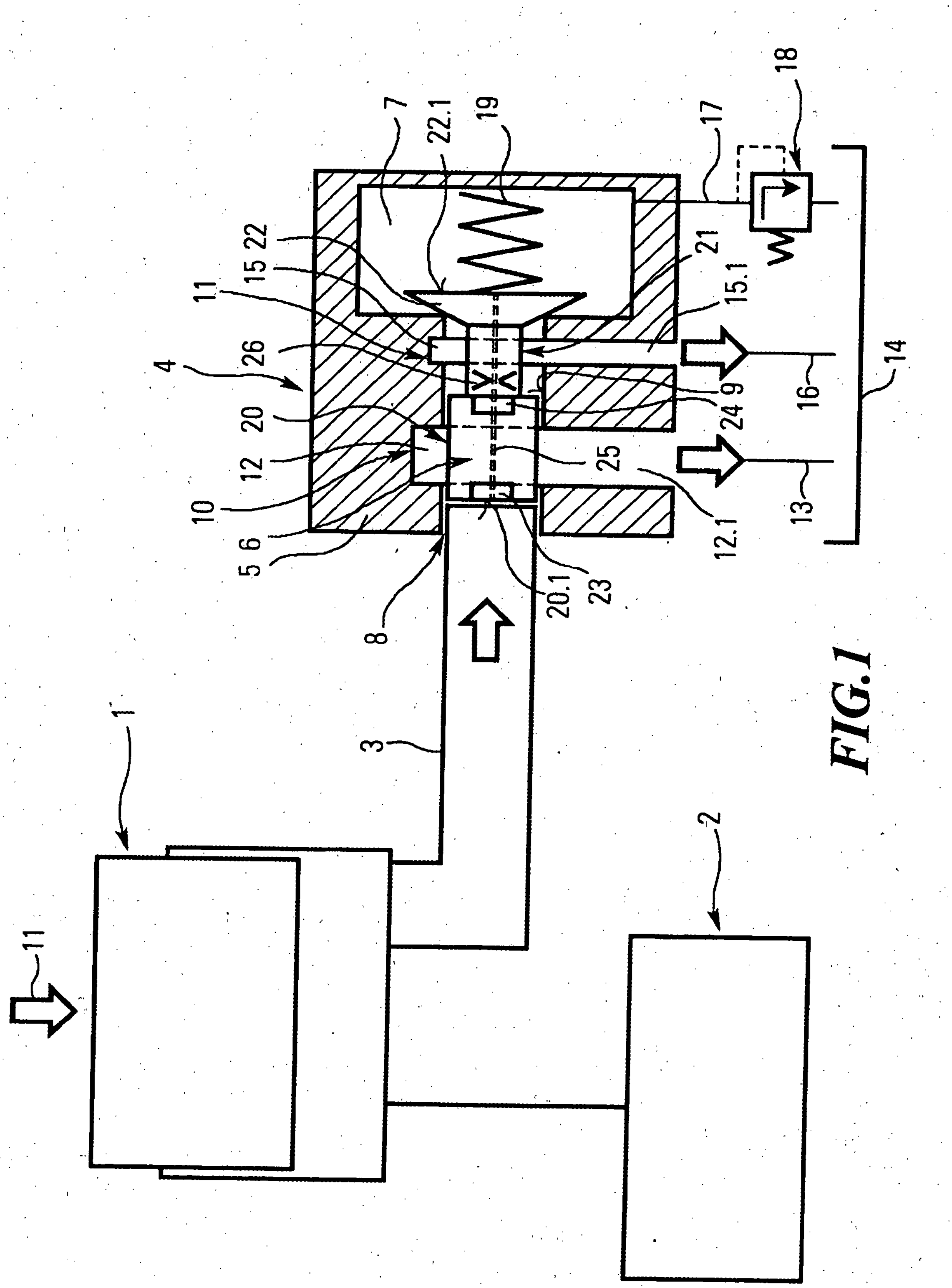
1
2
3
4
5 6
7
8
10
11
12
12.1
13
14
15 22
15.1
16
17
18
19
20
20.1
21
22.1
23
24 9
25
26
11

FIG.1

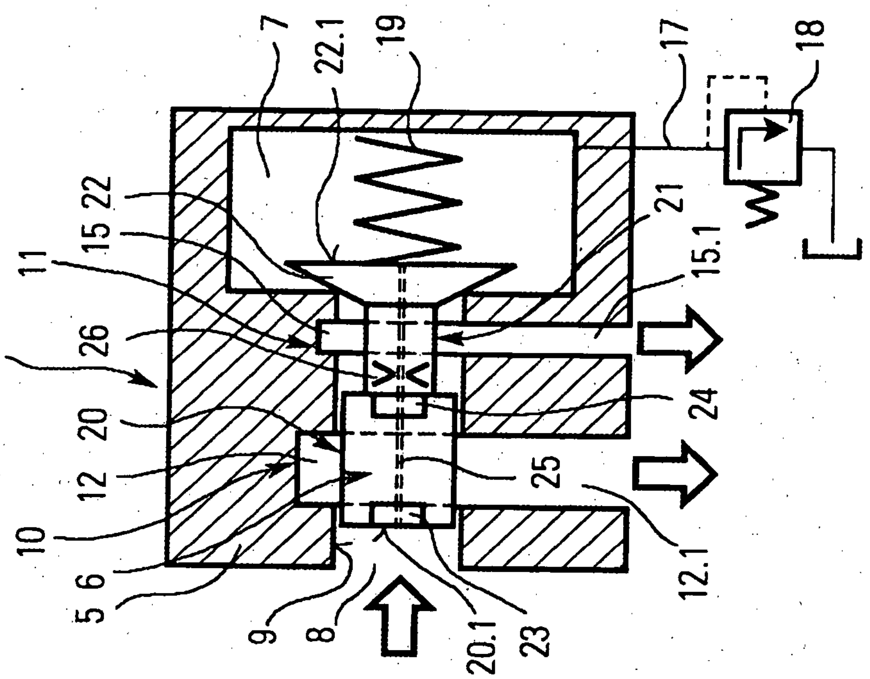
4
5
6
7
8
9
10
11
12
12.1
15
15.1
17
18
19
20
20.1
21
22
22.1
23
24
25
26

FIG.2

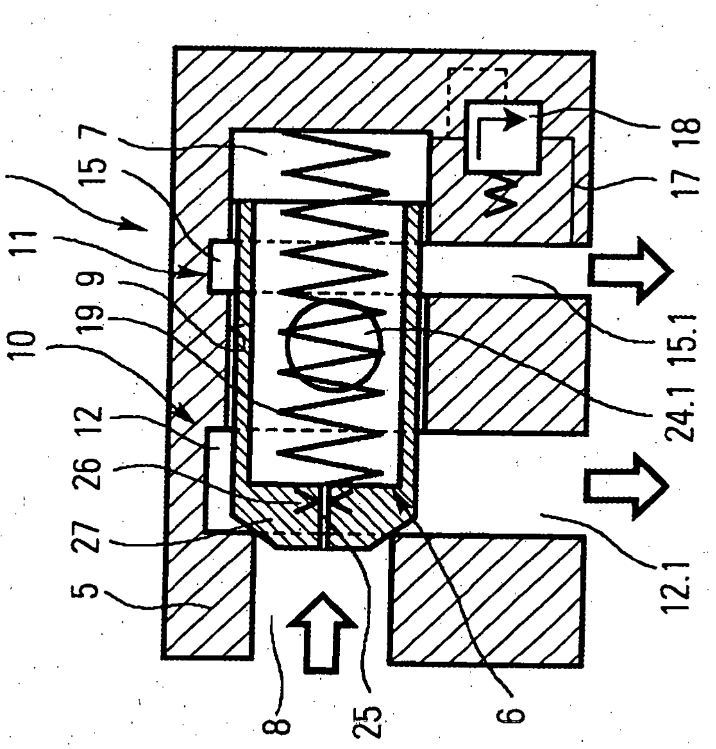
4
5
6
7
8
9
10
11
12
12.1
15
15.1
17
18
19
24.1
25
26
27

FIG.3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4015620 A
- US 3180555 A